# EUROPÄISCHE PATENTSCHRIFT

(11) **EP 3 441 262 B1**
(45) Veröffentlichungstag und Bekanntmachung des Hinweises auf die Patenterteilung: **01.11.2023**
(21) Anmeldenummer: 18187413.2
(22) Anmeldetag: 06.08.2018
(51) Int. Cl.: B60Q 1/14

(54) **LENKSÄULENMODUL FÜR EIN KRAFTFAHRZEUG MIT EINER FLÜGELARTIGEN ZAHNSTANGE AN EINEM LENKSTOCKHEBEL, SOWIE KRAFTFAHRZEUG MIT EINEM DERARTIGEN LENKSÄULENMODUL**
STEERING COLUMN MODULE FOR A MOTOR VEHICLE WITH A WINGLIKE RACK ON A STEERING COLUMN LEVER, AND MOTOR VEHICLE COMPRISING SUCH A STEERING COLUMN MODULE
MODULE DE COLONNE DE DIRECTION POUR UN VÉHICULE AUTOMOBILE POURVU D'UNE CRÉMAILLÈRE DE TYPE AILETTE SUR UN LEVIER DE DIRECTION AINSI QUE VÉHICULE POURVU D'UN TEL MODULE DE COLONNE DE DIRECTION

(30) Priorität: 11.08.2017 DE 102017118293
(43) Veröffentlichungstag der Anmeldung: 13.02.2019
(73) Patentinhaber: Valeo Schalter und Sensoren GmbH, 74321 Bietigheim-Bissingen (DE)
(72) Erfinder: Mack, Raphael, 74321 Bietigheim-Bissingen (DE); Lipfert, Rainer, 74321 Bietigheim-Bissingen (DE); Schmidt, Dirk, 74321 Bietigheim-Bissingen (DE); Habodas-Roessel, Katalin, 74321 Bietigheim-Bissingen (DE); Mayr, Alexander, 74321 Bietigheim-Bissingen (DE); Koerner, Frank, 90411 Nürnberg (DE); Mueller, Stefan, 74321 Bietigheim-Bissingen (DE)
(74) Vertreter: Pothmann, Karsten

(56) Entgegenhaltungen:
- EP-A2- 1 022 193
- DE-A1-102006 030 745
- DE-A1-102008 049 679
- JP-A- 2011 090 501
- JP-A- 2015 220 065
- US-A1- 2011 219 895

## Beschreibung

Die Erfindung betrifft ein Lenksäulenmodul für ein Kraftfahrzeug. Das Lenksäulenmodul weist zumindest einen Lenkstockhebel auf. Das Lenksäulenmodul weist darüber hinaus ein Basismodul auf, an dem der Lenkstockhebel bewegbar angeordnet ist. Das Lenksäulenmodul weist des Weiteren eine Zahnungskoppelvorrichtung auf, die ein erstes Zahnungselement aufweist, das in dem Basismodul angeordnet ist. Die Zahnungskoppelvorrichtung weist ein zweites Zahnungselement auf, das mit dem Lenkstockhebel verbunden ist und mit dem Zahnungselement kämmt. Abhängig von einer Bewegung des Lenkstockhebels ist eine Bewegung des ersten Zahnungselements bewirkbar. Abhängig davon ist die Bewegung des Lenkstockhebels erkennbar, wobei der Lenkstockhebel einen Koppelabschnitt aufweist, der im Basismodul angeordnet ist.

Das zweite Zahnungselement ist als bogenförmige Zahnstange ausgebildet, die an einer Seitenwand des Koppelabschnitts angeordnet ist und von der Seitenwand flügelartig abstehend orientiert ist, so dass das zweite Zahnungselement überlappungsfrei mit der Längsachse des Lenkstockhebels angeordnet ist. Das Lenksäulenmodul weist eine Auswerteeinheit auf, die im Basismodul angeordnet ist und mit welcher eine durch die Bewegung des Lenkstockhebels hervorgerufene Bewegung des ersten Zahnungselements magnetisch erfassbar ist. Ein Magnetelement der Auswerteeinheit ist fest mit dem ersten Zahnungselement verbunden, und ein Magnetfelderfassungselement der Auswerteeinheit ist extern zum ersten Zahnungselement angeordnet. Des Weiteren betrifft die Erfindung auch ein Kraftfahrzeug mit einem derartigen Lenksäulenmodul.

Lenkstockhebel und Lenksäulenmodule sind aus dem Stand der Technik bekannt. Beispielsweise ist hier auf die DE 10 2014 109 726 A1 zu verweisen. Entsprechendes ist auch aus der DE 10 2014 107 840 A1 bekannt.

Des Weiteren ist aus der US 2008/0211609 A1 ein Lenksäulenmodul bekannt. An einem Lenkstockhebel ist dort in Richtung der Längsachse des Lenkstockhebels frontseitig ein Zahnungselement angeordnet, welches sich von einem inneren Hebelteil nach unten erstreckt, die Zahnung jedoch nach vorne hin orientiert ist. Dieses Zahnungselement kämmt mit einem Zahnrad.

Weitere Lenksäulenmodule für Kraftfahrzeuge sind aus US 2011/219895 A1 und JP 2011 090501 A bekannt.

Mit einem Lenkstockschalter können unterschiedliche Betriebsfunktionen und Funktionseinheiten eines Kraftfahrzeugs eingestellt werden. Beispielsweise kann hier durch Betätigen des Lenkstockhebels ein Richtungsblinker aktiviert werden. Ebenso kann beispielsweise eine Scheibenwaschanlage und/oder ein Scheibenwischer betätigt werden. Beispielsweise kann auch eine Lichthupe betätigt werden. Diese Betriebsfunktionen sind nur beispielhaft zu verstehen und nicht abschließend zu verstehen. Sie verdeutlichen, welche Funktionalität ein derartiger Lenkstockhebel aufweist und welche Bedeutung er daher in einem Fahrzeug aufweist.

Durch eine derartige Ausgestaltung der miteinander kämmenden Zahnungselemente und einer dort gewählten spezifischen örtlichen Positionierung ist die Bewegbarkeit des Lenkstockhebels, insbesondere bei Bewegungen in zwei unterschiedliche Raumrichtungen, eingeschränkt. Darüber hinaus wird spezifischer Bauraum in Bereichen benötigt, in dem ohnehin Komponenten vielzählig angeordnet sind und untergebracht werden müssen.

Es ist Aufgabe der vorliegenden Erfindung, ein Lenksäulenmodul zu schaffen, bei welchem die Bewegung des Lenkstockhebels sicher und präzise übertragen werden kann und eine dazu vorgesehene Zahnradkoppelvorrichtung verbessert ausgestaltet und positioniert ist.

Diese Aufgabe wird durch ein Lenksäulenmodul und ein Kraftfahrzeug gemäß den unabhängigen Ansprüchen gelöst.

Ein Aspekt der Erfindung betrifft ein Lenksäulenmodul für ein Kraftfahrzeug. Das Lenksäulenmodul weist zumindest einen Lenkstockhebel auf. Das Lenksäulenmodul weist darüber hinaus ein Basismodul auf, an dem der Lenkstockhebel bewegbar angeordnet ist. Das Lenksäulenmodul weist darüber hinaus eine Zahnungskoppelvorrichtung auf, die ein erstes Zahnungselement aufweist, das in dem Basismodul angeordnet ist. Die Zahnungskoppelvorrichtung weist ein dazu separates zweites Zahnungselement auf, das mit dem Lenkstockhebel verbunden ist. Das zweite Zahnungselement kämmt mit dem ersten Zahnungselement. Abhängig von einer Bewegung des Lenkstockhebels ist eine Bewegung des ersten Zahnungselements bewirkbar, und abhängig von dieser Bewegung des ersten Zahnungselements ist die Bewegung des Lenkstockhebels erkennbar. Der Lenkstockhebel weist einen Koppelabschnitt auf, der zumindest bereichsweise im Basismodul angeordnet ist. Das zweite Zahnungselement ist als bogenförmige Zahnstange ausgebildet, die an einer Seitenwand des Koppelabschnitts angeordnet ist und von der Seitenwand flügelartig abstehend orientiert ist.

Durch eine derartige Ausgestaltung des Lenksäulenmoduls mit der spezifischen Orientierung und Formgebung des zweiten Zahnungselements ist dieses quasi neben dem eigentlichen Volumen des Koppelabschnitts angeordnet, sodass das Volumen des Koppelabschnitts in seinem Bauraum nicht auch noch durch das zweite Zahnungselement eingeschränkt ist. Darüber hinaus ist durch diese seitliche Anordnung und Erstreckung des zweiten Zahnungselements auch eine verbesserte und umfänglichere Kopplung mit dem ersten Zahnungselement ermöglicht. Eine verbesserte Kopplung ist dadurch auch erreicht.

Der Lenkstockhebel weist eine Längsachse auf, die auch durch den Koppelabschnitt verläuft. Beidseits dieses Koppelabschnitts sind Seitenwände ausgebildet, wobei an einer dieser Seitenwand dieses zweite Zahnungselement angeordnet ist. Dieses zweite Zahnungselement ist somit überlappungsfrei mit der Längsachse des Lenkstockhebels angeordnet. Es erstreckt sich lediglich auf einer Seite dieser Längsachse. Bei einer Projektionsbetrachtung auf den Lenkstockhebel ist die Seitenwand insbesondere vollständig neben der Längsachse angeordnet beziehungsweise erstreckt sich vollständig neben der Längsachse. Dieses zweite Zahnungselement in Form der bogenförmigen Zahnstange erstreckt sich bei einer derartigen Projektionsbetrachtung über die gesamte Ausgestaltung seitlich zur Längsachse. Auch dadurch ist die flügelartige Ausgestaltung spezifiziert.

Das zweite Zahnungselement kann einstückig mit der Seitenwand und somit dem Koppelabschnitt ausgebildet sein. Das zweite Zahnungselement kann jedoch auch als separates Bauteil ausgebildet sein und an der Seitenwand befestigt sein, insbesondere auch zerstörungsfrei lösbar daran angeordnet sein.

insbesondere ist das zweite Zahnungselement frei kragend von der Seitenwand seitlich abstehend. Die oben genannten Vorteile sind dadurch in besonderem Maße erreicht.

Gemäß der Erfindung ist das erste Zahnungselement ein Zahnrad. Dieses kann dadurch kompakt aufgebaut werden und dennoch über eine relativ lange Abrollstrecke mit dem zweiten Zahnungselement kämmen. Dadurch kann mit entsprechend reduziertem Bauraum auch eine längere Bewegung des Lenkstockhebels auf das Zahnrad übertragen werden.

Gemäß der Erfindung ist das erste Zahnungselement um eine Drehachse drehbar gelagert und in Richtung der Drehachse axial bewegbar gelagert. Diese zwei unterschiedlichen Bewegungsmöglichkeiten des ersten Zahnungselements ermöglichen es auch, zumindest zwei unterschiedliche Betätigungsrichtungen des Lenkstockhebels genau zu erfassen. Die mit diesen individuellen Betätigungsarten einhergehenden Betriebsfunktionen, die mit dem Lenkstockhebel ausgelöst werden können, sind dadurch auch einfach und zuverlässig auswählbar.

Gemäß der Erfindung sind die beiden Zahnungselemente derart gekoppelt, dass bei einer ersten Betätigungsrichtung des Lenkstockhebels das erste Zahnungselement um die Drehachse gedreht wird. Das Lenksäulenmodul weist eine Auswerteeinheit auf, mit welcher abhängig von dem Erkennen dieser Drehbewegung diese erste Betätigungsrichtung erkannt wird. Die mit dieser ersten Betätigungsrichtung verknüpfte Betriebsfunktion ist dadurch einfach und sicher erkennbar und kann dann entsprechend ausgeführt werden.

Gemäß der Erfindung weist das Lenksäulenmodul einen Mitnehmer auf, der mit dem Lenkstockhebel gekoppelt ist. Bei einer zweiten Betätigungsrichtung des Lenkstockhebels ist das erste Zahnungselement in axialer Richtung durch den Mitnehmer verschiebbar.

Gemäß der Erfindung weist das Lenksäulenmodul eine Auswerteeinheit auf, mit welcher abhängig von dem Erkennen dieser Verschiebebewegung des ersten Zahnungselements diese zweite Betätigungsrichtung erkennbar ist.

Gemäß der Erfindung weist das Lenksäulenmodul eine Auswerteeinheit auf, die im Basismodul angeordnet ist und mit welcher eine durch die Bewegung des Lenkstockhebels hervorgerufene Bewegung des ersten Zahnungselements magnetisch erfassbar ist. Eine magnetische Erfassungseinrichtung ist detektionssicher und kann dennoch sehr kompakt und platzsparend ausgebildet sein. Darüber hinaus ist sie gegenüber unterschiedlichen Umgebungsbedingungen, insbesondere unterschiedlichen Temperaturbedingungen relativ unempfindlich.

Gemäß der Erfindung ist ein Magnetelement der Auswerteeinheit fest mit dem ersten Zahnungselement verbunden und ein Magnetfelderfassungselement der Auswerteeinheit ist extern zum ersten Zahnungselement angeordnet. Die Bewegung des ersten Zahnungselements ist dadurch magnetisch sehr präzise detektierbar.

Vorzugsweise ist vorgesehen, dass mit dem einen Magnetelement und dem einen Magnetfelderfassungselement zwei verschiedene Betätigungsrichtungen des Lenkstockhebels erfassbar sind. Durch die quasi lediglich nur zwei magnetisch wirkenden Elemente kann eine multiple Betätigungserfassung erfolgen, sodass die magnetische Erfassungseinrichtung auch sehr bauteilreduziert ausgebildet ist.

Vorzugsweise weist die Auswerteeinheit ein erstes Magnetfelderfassungselement auf, mit dem in magnetischer Wechselwirkung mit dem Magnetelement eine erste Betätigungsrichtung des Lenkstockhebels erfassbar ist. Die Auswerteeinheit weist ein separates zweites Magnetfelderfassungselement auf, mit dem in magnetischer Wirkverbindung mit dem Magnetelement eine zweite Betätigungsrichtung des Lenkstockhebels erfassbar ist. Bei dieser alternativen Ausgestaltung mit mehreren Magnetfelderfassungselementen können diese dann abhängig von der Bauraumsituation an anderen Anordnungen und Geometrien von Komponenten individuell positioniert werden, um die Betätigungsrichtungen auch hier dann sehr exakt erfassen zu können.

In einer weiteren Ausführungsform ist vorgesehen, dass die Auswerteeinheit ein erstes Magnetfelderfassungselement aufweist, mit dem in magnetischer Wirkverbindung mit dem Magnetelement eine erste Betätigungsrichtung des Lenkstockhebels erfassbar ist. Die Auswerteeinheit weist eine optische Erfassungseinheit auf, mit der eine zweite Betätigungsrichtung des Lenkstockhebels optisch erfassbar ist. Bei dieser Ausführungsform ist eine gemischte magnetisch-optische Detektion unterschiedlicher Betätigungsrichtungen des Lenkstockhebels ausgebildet. Auch somit kann individuellen Verbausituationen oder Funktionsprinzipien spezifisch Rechnung getragen werden.

Es kann vorgesehen sein, dass ein Magnetfelderfassungselement ein Hall-Sensor, insbesondere ein 2-dimensionaler Hall-Sensor, ist. Es ist eine weitere vorteilhafte Ausführung, da somit eine Erfassung einer 3-dimensionalen Bewegung des Lenkstockhebels mit einem lediglich maximal 2-dimensionalen Hall-Sensor ermöglicht ist. Es ist daher nicht erforderlich, die relativ kostenintensiven 3-dimensionale Hall-Sensoren zu verbauen. Darüber hinaus ist durch eine oben genannte vorteilhafte Ausführung mit dem maximal 2-dimensionalen Hall-Sensor auch wiederum eine kompakte Bauraumsituation ermöglicht.

Vorzugsweise ist vorgesehen, dass der Lenkstockhebel mehrteilig ausgebildet ist und einen mit dem Koppelabschnitt verbundenen Griffbereich aufweist, der aus dem Basismodul herausstehend angeordnet ist und zum Betätigung des Lenkstockhebels greifbar ist.

Des Weiteren betrifft ein Aspekt der Erfindung ein Kraftfahrzeug mit einem Lenksäulenmodul gemäß dem oben genanten Aspekt oder einer vorteilhaften Ausgestaltung davon.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung, welcher nur durch die beigelegte Ansprüche limitiert ist, zu verlassen. Es sind somit auch Ausführungen von der Erfindung als umfasst und offenbart anzusehen, die in den

Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert.

Dabei zeigen:
- Fig. 1: eine Explosionsdarstellung eines Ausführungsbeispiels eines Lenksäulenmoduls;
- Fig. 2: das Lenksäulenmodul gemäß Fig. 1 im zusammengesetzten Zustand;
- Fig. 3: eine vereinfachte Seitenansicht eines Ausführungsbeispiels eines Kraftfahrzeugs mit einem Ausführungsbeispiel eines Lenksäulenmoduls;
- Fig. 4: eine perspektivische Darstellung eines Ausführungsbeispiels eines Lenkstockhebels mit weiteren Komponenten des Lenksäulenmoduls;
- Fig. 5: eine perspektivische Darstellung eines Koppelabschnitts des Lenkstockhebels gemäß Fig. 4 mit einem daran angeordneten Zahnungselement;
- Fig. 6: eine Draufsicht auf den Lenkstockhebel im Bereich des Koppelabschnitts mit dem Zahnungselement;
- Fig. 7: eine Seitenansicht der Darstellung gemäß Fig. 6; und
- Fig. 8: eine perspektivische Darstellung eines Teilausschnitts des Lenksäulenmoduls gemäß Fig. 2.

In den Figuren werden gleiche oder funktionsgleiche Elemente mit den gleichen Bezugszeichen versehen.

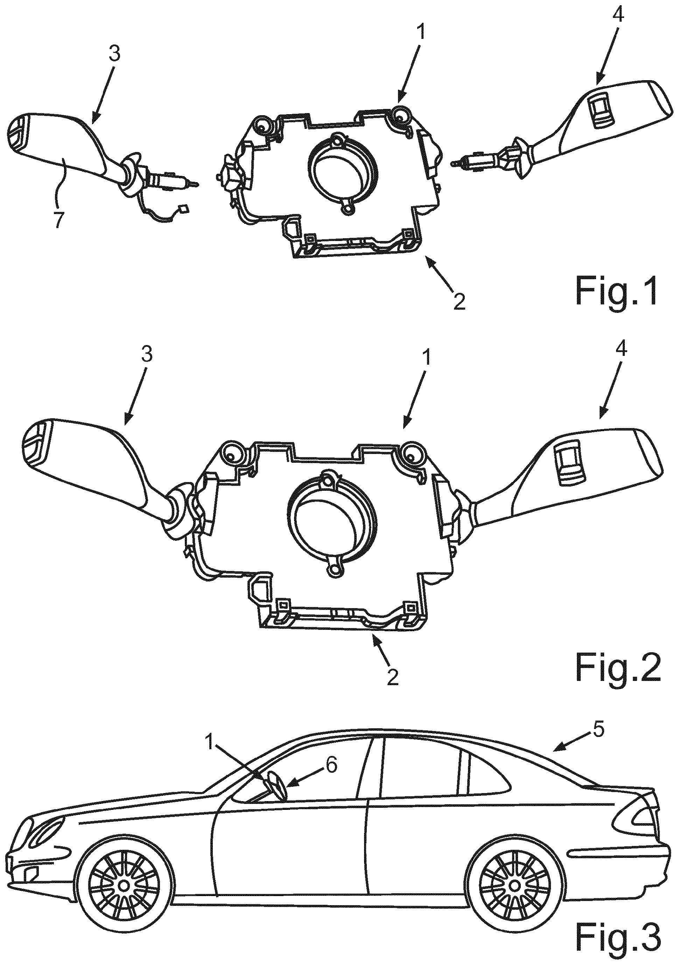

In Fig. 1 ist in einer Explosionsdarstellung ein Lenksäulenmodul 1 für ein Kraftfahrzeug gezeigt. Das Lenksäulenmodul 1 umfasst ein Basismodul 2 und im Ausführungsbeispiel zwei dazu separate Lenkstockhebel 3 und 4. Das Basismodul 2 kann elektronische Komponenten aufweisen, mit denen die Relativbewegung eines daran angeordneten Lenkstockhebels 3, 4 auswertbar ist und die dann eine mit dieser Bewegung verknüpfte Betriebsfunktion durchführen kann oder ein Signal erzeugen kann, welches an eine Steuereinheit übertragen werden kann, mittels welcher dann diese Betriebsfunktion eingeleitet und/oder durchgeführt werden kann.

In Fig. 2 ist das Lenksäulenmodul 1 im zusammengesetzten Zustand gezeigt. Es kann vorgesehen sein, dass ein Lenkstockhebel 3, 4 in verschiedenste Raumrichtungen relativ zu dem Basismodul 2 bewegbar ist, sodass die Einstellung unterschiedlichster und mehrzähliger Betriebsfunktionen beziehungsweise Betriebsbedingungen durch diese unterschiedlichen Bewegungsarten ermöglicht ist.

In Fig. 3 ist in einer vereinfachten Darstellung ein Kraftfahrzeug 5 gezeigt, welches ein Lenksäulenmodul 1 aufweist. Das Lenksäulenmodul 1 ist im Ausführungsbeispiel im Bereich eines Lenkrads 6 angeordnet, sodass ein Fahrzeugnutzer die Lenkstockhebel 3 und 4 in unmittelbarer Nähe zu diesem Lenkrad 6 vorfindet und somit einfach bedienen kann, auch ohne dass er die Hände vollständig vom Lenkrad 6 nehmen müsste.

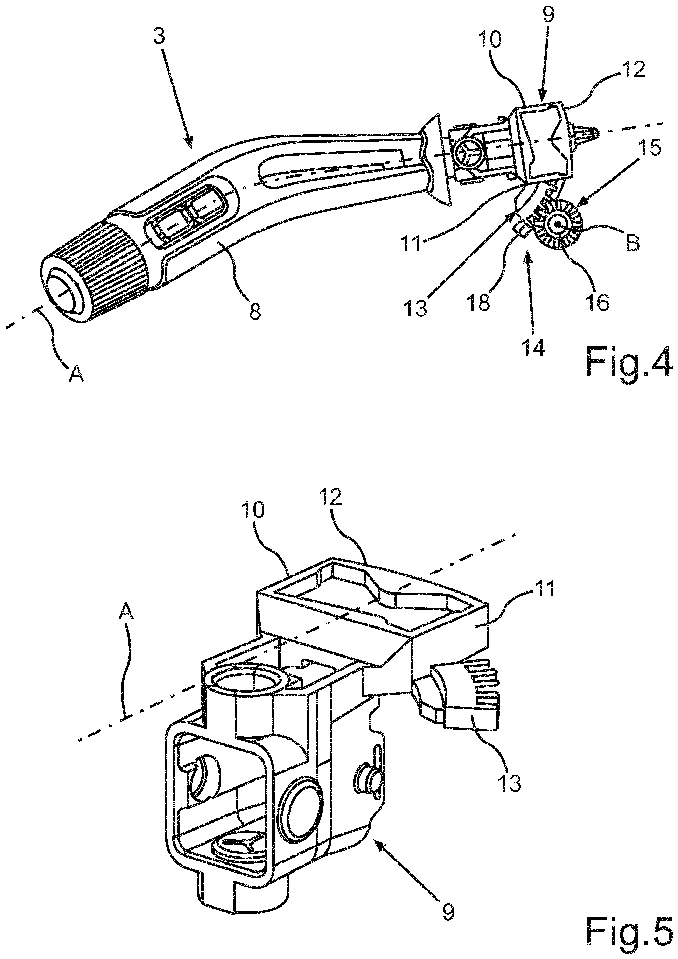

In Fig. 4 ist beispielhaft der Lenkstockhebel 3 gezeigt. Der Lenkstockhebel 3 weist einen stangenartigen beziehungsweise stabförmigen Griffbereich 8 auf. Darüber hinaus weist der Lenkstockhebel 4 entlang seiner Längsachse A betrachtet frontseitig einen Koppelabschnitt 9 auf. Der Koppelabschnitt 9 ist im verbauten Zustand hier in dem Basismodul 2 angeordnet. Der Koppelabschnitt 9 weist an gegenüberliegenden Seiten zur Längsachse A Seitenwände 10 und 11 auf. Frontseitig ist eine Stirnseite 12 ausgebildet.

An dem Koppelabschnitt 9 ist ein zweites Zahnungselement 13, welches hier eine bogenförmige Zahnstange ist, angeordnet. Dieses zweite Zahnungselement 13 ist somit hier an der Seitenwand 11 ortsfest angeordnet und flügelartig zur Seite abstehend. Wie zu erkennen ist, erstreckt sich dieses zweite Zahnungselement 13 über die gesamte Ausgestaltung und somit über seine gesamte Länge neben der Längsachse A und ist somit überlappungsfrei zu dieser Längsachse A angeordnet.

Dieses zweite Zahnungselement 13 ist Bestandteil einer Zahnungskoppelvorrichtung 14. Die Zahnungskoppelvorrichtung 14 ist wiederum Bestandteil des Lenksäulenmoduls 1. Diese Zahnungskoppelvorrichtung 14 weist auch noch ein erstes Zahnungselement 15 auf, welches hier ein Zahnrad ist. Wie in Fig. 4 zu erkennen ist, kämmt das erste Zahnungselement 15 mit dem zweiten Zahnungselement 13. Das erste Zahnungselement 15 ist extern zum Lenkstockhebel 3 angeordnet. Das erste Zahnungselement 15 ist in dem Basismodul 2 angeordnet. Abhängig von einer Bewegung des Lenkstockhebels 3 ist eine Bewegung des ersten Zahnungselements 15 bewirkbar. Abhängig davon ist die Bewegung des Lenkstockhebels 3 erkennbar. Eine mit der Bewegung beziehungsweise der Betätigungsart des Lenkstockhebels 3 verknüpfte Betriebsfunktion kann dann entsprechend ausgewählt beziehungsweise durchgeführt werden.

In Fig. 5 ist in einer perspektivischen Darstellung der Koppelabschnitt 9 des Lenkstockhebels 3 gezeigt. Die Anordnung, Formgebung und Erstreckung des zweiten Zahnungselements 13 ist hier perspektivisch gezeigt.

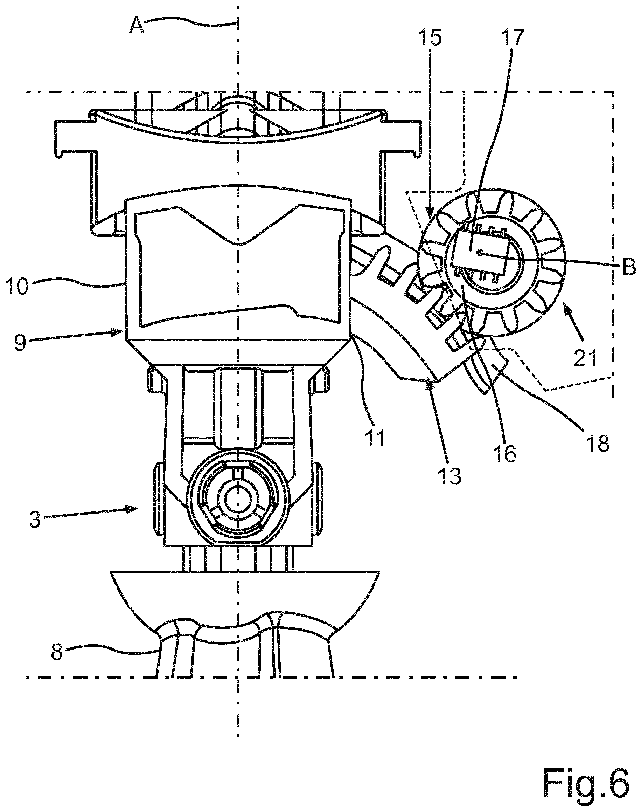

In Fig. 6 ist in einer Draufsicht auf den Lenkstockhebel 3, der hier in einem Teilabschnitt gezeigt ist, die Ausgestaltung gemäß Fig. 4 nochmals verdeutlicht. In dieser Projektionsbetrachtung ist die Anordnung und Erstreckung des zweiten Zahnungselements 13 besonders vorteilhaft zu erkennen. Das ebenfalls seitlich zum Koppelabschnitt 9 angeordnete erste Zahnungselement 15 ist um eine senkrecht zur Figurenebene orientierte Drehachse B drehbar. Das erste Zahnungselement 15 weist ein magnetisch wirkendes Element, hier einen Magneten 16 auf. In axialer Richtung und somit in Richtung der Drehachse B betrachtet, ist beabstandet zu diesem Magneten 16 ein Magnetfelderfassungselement 17 angeordnet. Das Magnetfelderfassungselement 17 ist insbesondere ein Hall-Sensor, vorzugsweise ein 2-dimensionaler Hall-Sensor. Wird der Lenkstockhebel 3 gemäß einer ersten Betätigungsart betätigt, wird das erste Zahnungselement 15 nur um die Drehachse B gedreht. Die axiale Position bleibt hier gleich. Diese Drehbewegung wird über das Magnetfelderfassungselement 17 erfasst.

Wird der Lenkstockhebel 3 in einer dazu unterschiedlichen zweiten Betätigungsrichtung und somit in einer zweiten Betätigungsart betätigt, so wird das erste Zahnungselement 15 durch einen Mitnehmer 18 in Richtung der Drehachse B axial verschoben, insbesondere in Richtung zum Magnetfelderfassungselement 17 hin verschoben. Auch diese Bewegung des ersten Zahnungselements 15 wird dann bei dem gezeigten Ausführungsbeispiel magnetisch erfasst und erkannt. Auch hier wird dann die zugeordnete Betriebsfunktion, beispielsweise eine Fernlichtfunktion, durchgeführt. Eine Betriebsfunktion, die bei der ersten Betätigungsrichtung des Lenkstockhebels durchgeführt wird, ist beispielsweise ein Blinken.

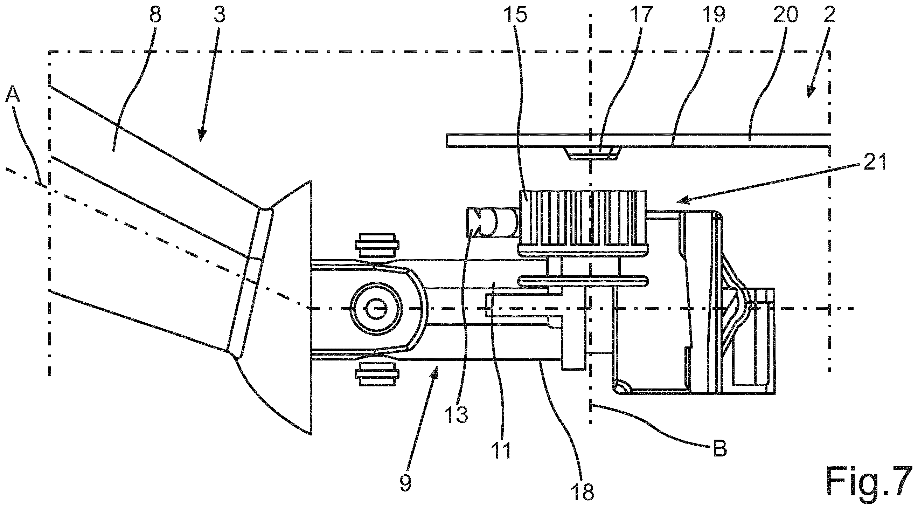

Vorzugsweise ist vorgesehen, dass das Magnetfelderfassungselement 17, wie es in der Seitenansicht gemäß Fig. 7 zu erkennen ist, an einer Innenseite 19 einer Deckenwand 20 des Basismoduls 2 angeordnet ist.

Bei der hier gezeigten Ausführung werden beide unterschiedlichen Betätigungsrichtungen des Lenkstockhebels 3 und die daraus resultierenden unterschiedlichen Bewegungen des ersten Zahnungselements 15 mit einem einzigen Magnetfelderfassungselement 17 erfasst.

In einer weiteren Ausführung kann vorgesehen sein, dass die Auswerteeinheit 21 ein erstes Magnetfelderfassungselement aufweist, mit dem in magnetischer Wirkverbindung mit dem Magnetelement 16 eine erste Betätigungsrichtung des Lenkstockhebels 3 erfassbar ist, und die Auswerteeinheit 21 ein separates zweites Magnetfelderfassungselement aufweist, mit dem in magnetischer Wirkverbindung mit dem Magnetelement 16 eine zweite Betätigungsrichtung des Lenkstockhebels 3 erfassbar ist. Bei einer derartigen Ausgestaltung weist die Auswerteeinheit 21 im Unterschied zur vorhergehenden Ausführung somit ein Magnetelement 16 und zwei verschiedene Magnetfelderfassungselemente auf.

In einer weiteren Ausführungsform kann vorgesehen sein, dass die Auswerteeinheit 21 ein erstes Magnetfelderfassungselement aufweist, mit dem in magnetischer Wirkverbindung mit dem Magnetelement 16 eine erste Betätigungsrichtung des Lenkstockhebels 3 erfassbar ist. Die Auswerteeinheit 21 weist bei diesem Ausführungsbeispiel auch eine optische Erfassungseinheit auf, mit der eine zweite Betätigungsrichtung des Lenkstockhebels 3 optisch erfassbar ist.

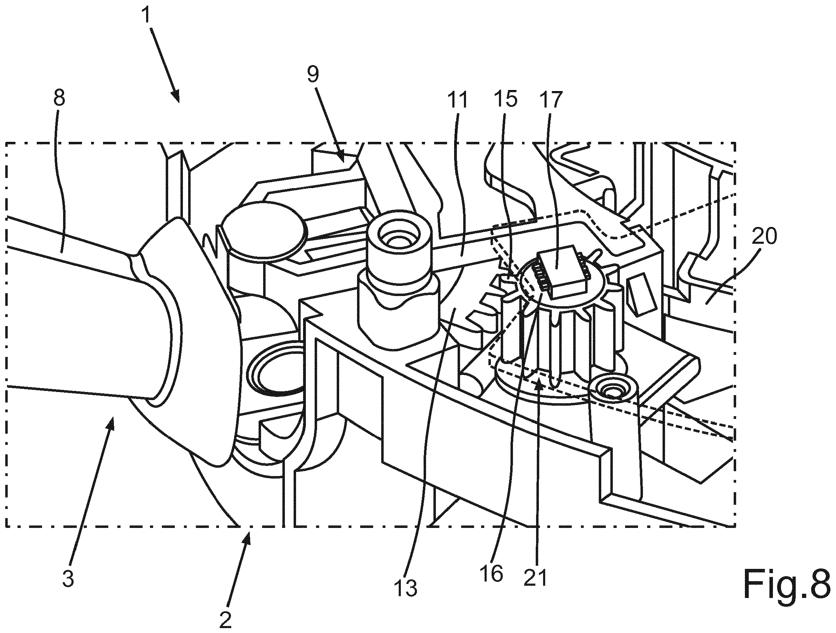

In Fig. 8 ist in perspektivischer Darstellung ein Teilausschnitt des Lenksäulenmoduls 1 im Bereich des Koppelabschnitts 9 und den beiden Zahnungselementen 13 und 15 gezeigt.

insbesondere ist das zweite Zahnungselement 13 ortsfest an dem Koppelabschnitt 9 angeordnet. Es kann einstückig mit dem Koppelabschnitt 9 ausgebildet sein.

Grundsätzlich kann bei den Ausführungen eine 3-dimensionale Bewegung des Lenkstockhebels 3 mit einem 2-dimensionalen Magnetfeldsensor, insbesondere einem entsprechenden Hall-Sensor erfasst werden.

Durch eine Anpassung des Übersetzungsverhältnisses zwischen dem ersten Zahnungselement 13 und dem zweiten Zahnungselement 15 kann die Empfindlichkeit gegenüber einem Fremdfeld als auch gegenüber mechanischen Toleranzen beeinflusst werden.

Durch die genannten Ausführungsbeispiele, als auch darüber hinausgehende Beispiele kann eine Begrenzung von Schaltzyklen eliminiert werden und eine einfache Erfassung der Bewegung des Lenkstockhebels ist durch einen derartigen Magnetfeldsensor ermöglicht.

## Patentansprüche

1. Lenksäulenmodul (1) für ein Kraftfahrzeug (5), mit zumindest einem Lenkstockhebel (3, 4), welcher eine Längsachse (A) aufweist und mit einem Basismodul (2), an dem der Lenkstockhebel (3, 4) bewegbar angeordnet ist, und mit einer Zahnungskoppelvorrichtung (14), die ein erstes Zahnungselement (15) aufweist, das ein Zahnrad ist, und das erste Zahnungselement (15) um eine Drehachse (B) drehbar gelagert ist, und in dem Basismodul (2) angeordnet ist, und ein zweites Zahnungselement (13) aufweist, das mit dem Lenkstockhebel (3, 4) verbunden ist und mit dem ersten Zahnungselement (15) kämmt, wobei abhängig von einer Bewegung des Lenkstockhebels (3, 4) eine Bewegung des ersten Zahnungselements (15) bewirkbar ist, und abhängig davon die Bewegung des Lenkstockhebels (3, 4) erkennbar ist, wobei der Lenkstockhebel (3, 4) einen Koppelabschnitt (9) aufweist, der im Basismodul (2) angeordnet ist,
wobei das zweite Zahnungselement (13) als bogenförmige Zahnstange ausgebildet ist, die an einer Seitenwand (10, 11) des Koppelabschnitts (9) angeordnet ist und von der Seitenwand (10, 11) flügelartig abstehend orientiert ist, so dass das zweite Zahnungselement (13) überlappungsfrei mit der Längsachse (A) des Lenkstockhebels angeordnet ist, wobei das Lenksäulenmodul (1) eine Auswerteeinheit (21) aufweist, die im Basismodul (2) angeordnet ist und mit welcher eine durch die Bewegung des Lenkstockhebels (3, 4) hervorgerufene Bewegung des ersten Zahnungselements (15) magnetisch erfassbar ist,
wobei ein Magnetelement (16) der Auswerteeinheit (21) fest mit dem ersten Zahnungselement (15) verbunden ist, und ein Magnetfelderfassungselement (17) der Auswerteeinheit (21) extern zum ersten Zahnungselement (15) angeordnet ist,
**dadurch gekennzeichnet, dass**
das erste Zahnungselement (15) in Richtung der Drehachse (B) axial bewegbar gelagert ist, wobei das Lenksäulenmodul (1) einen Mitnehmer (18) aufweist, der mit dem Lenkstockhebel (3, 4) gekoppelt ist, wobei bei einer zweiten Betätigungsrichtung des Lenkstockhebels (3, 4) das erste Zahnungselement (15) in axialer Richtung durch den Mitnehmer (18) verschiebbar ist, wobei mit der Auswerteeinheit (21) abhängig von dem Erkennen dieser Verschiebebewegung diese zweite Betätigungsrichtung erkannt wird.

2. Lenksäulenmodul (1) nach Anspruch 1,
**dadurch gekennzeichnet, dass**
das zweite Zahnungselement (13) frei kragend von der Seitenwand (10, 11) absteht.

3. Lenksäulenmodul (1) nach Anspruch 1,
**dadurch gekennzeichnet, dass**
die Zahnungselemente (13, 15) derart gekoppelt sind, dass bei einer ersten Betätigungsrichtung des Lenkstockhebels (3, 4) das erste Zahnungselement (15) um die Drehachse (B) gedreht wird, und mit der Auswerteeinheit (21) abhängig von dem Erkennen dieser Drehbewegung diese erste Betätigungsrichtung erkannt wird.

4. Lenksäulenmodul (1) nach Anspruch 1,
**dadurch gekennzeichnet, dass**
mit dem einen Magnetelement (16) und dem einen Magnetfelderfassungselement (17) zwei verschiedene Betätigungsrichtungen des Lenkstockhebels (3, 4) erfassbar sind.

5. Lenksäulenmodul (1) nach Anspruch 1,
**dadurch gekennzeichnet, dass**
die Auswerteeinheit (21) ein erstes Magnetfelderfassungselement (17) aufweist, mit dem in magnetischer Wirkverbindung mit dem Magnetelement (16) eine erste Betätigungsrichtung des Lenkstockhebels (3, 4) erfassbar ist, und die Auswerteeinheit (21) ein separates zweites Magnetfelderfassungselement aufweist, mit dem in magnetischer Wirkverbindung mit dem Magnetelement (16) eine zweite Betätigungsrichtung des Lenkstockhebels (3, 4) erfassbar ist.

6. Lenksäulenmodul (1) nach Anspruch 1,
**dadurch gekennzeichnet, dass**
die Auswerteeinheit (21) ein erstes Magnetfelderfassungselement (17) aufweist, mit dem in magnetischer Wirkverbindung mit dem Magnetelement (16) eine erste Lenkstockhebels (3, 4) erfassbar ist, und die Auswerteeinheit (21) eine optische Erfassungseinheit aufweist, mit der eine zweite Betätigungsrichtung des Lenkstockhebels (3, 4) optisch erfassbar ist.

7. Lenksäulenmodul (1) nach einem der vorhergehenden Ansprüche 1 bis 6,
**dadurch gekennzeichnet, dass**
ein Magnetfelderfassungselement (17) ein Hall-Sensor, insbesondere ein 2-dimensionaler Hall-Sensor, ist.

8. Lenksäulenmodul (1) nach einem der vorhergehenden Ansprüche,
**dadurch gekennzeichnet, dass**
der Lenkstockhebel (3, 4) mehrteilig ausgebildet ist und einen mit dem Koppelabschnitt (9) verbundenen Griffbereich (8) aufweist, der aus dem Basismodul (2) herausstehend angeordnet ist und zum Betätigen des Lenkstockhebels (3, 4) greifbar ist.

9. Kraftfahrzeug (5) mit einem Lenksäulenmodul (1) nach einem der vorhergehenden Ansprüche.

## Claims

1. Steering column module (1) for a motor vehicle (5), comprising at least one steering column stalk (3, 4) which has a longitudinal axis (A), and comprising a base module (2) on which the steering column stalk (3, 4) is movably arranged, and comprising a toothing coupling device (14) which has a first toothing element (15), which is a gear, and the first toothing element (15) is mounted rotatably about a rotation axis (B) and is arranged in the base module (2), and has a second toothing element (13) which is connected to the steering column stalk (3, 4) and meshes with the first toothing element (15), wherein, depending on a movement of the steering column stalk (3, 4), a movement of the first toothing element (15) can be implemented, and depending on this movement the movement of the steering column stalk (3, 4) can be identified, wherein the steering column stalk (3, 4) has a coupling section (9) which is arranged in the base module (2), wherein the second toothing element (13) is in the form of an arcuate toothed rack which is arranged on a side wall (10, 11) of the coupling section (9) and is oriented projecting in a wing-like manner from the side wall (10, 11), so that the second toothing element (13) is arranged without overlapping with the longitudinal axis (A) of the steering column stalk, wherein the steering column module (1) has an evaluation unit (21) which is arranged in the base module (2) and with which a movement of the first toothing element (15) caused by the movement of the steering column stalk (3, 4) can be magnetically detected, wherein a magnet element (16) of the evaluation unit (21) is fixedly connected to the first toothing element (15), and a magnetic field detection element (17) of the evaluation unit (21) is arranged externally with respect to the first toothing element (15),
**characterized in that**
the first toothing (15) is mounted axially movably in the direction of the rotation axis (B), wherein the steering column module (1) has a driver (18) which is coupled to the steering column stalk (3, 4), wherein, in the case of a second operating direction of the steering column stalk (3, 4), the first toothing element (15) can be displaced in the axial direction by the driver (18), wherein this second operating direction is identified by the evaluation unit (21) depending on this displacement movement being identified.

2. Steering column module (1) according to Claim 1,
**characterized in that**
the second toothing element (13) projects in a freely protruding manner from the side wall (10, 11).

3. Steering column module (1) according to Claim 1,
**characterized in that**
the toothing elements (13, 15) are coupled in such a way that, in the case of a first operating direction of the steering column stalk (3, 4), the first toothing element (15) is rotated about the rotation axis (B), and this first operating direction is identified by the evaluation unit (21) depending on this rotational movement being identified.

4. Steering column module (1) according to Claim 1,
**characterized in that**
two different operating directions of the steering column stalk (3, 4) can be detected by the one magnet element (16) and the one magnetic field detection element (17).

5. Steering column module (1) according to Claim 1,
**characterized in that**
the evaluation unit (21) has a first magnetic field detection element (17) with which a first operating direction of the steering column stalk (3, 4) can be detected in magnetic interaction with the magnet element (16), and the evaluation unit (21) has a separate second magnetic field detection element with which a second operating direction of the steering column stalk (3, 4) can be detected in magnetic interaction with the magnet element (16).

6. Steering column module (1) according to Claim 1,
**characterized in that**
the evaluation unit (21) has a first magnetic field detection element (17) with which a first steering column stalk (3, 4) can be detected in magnetic interaction with the magnet element (16), and the evaluation unit (21) has an optical detection unit with which a second operating direction of the steering column stalk (3, 4) can be optically detected.

7. Steering column module (1) according to one of the preceding Claims 1 to 6,
**characterized in that**
a magnetic field detection element (17) is a Hall sensor, in particular a two-dimensional Hall sensor.

8. Steering column module (1) according to one of the preceding claims,
**characterized in that**
the steering column stalk (3, 4) is formed in multiple parts and has a grip region (8) which is connected to the coupling section (9), is arranged so as to stick out of the base module (2) and can be grasped for the purpose of operating the steering column stalk (3, 4).

9. Motor vehicle (5) comprising a steering column module (1) according to one of the preceding claims.

## Revendications

1. Module de colonne de direction (1) pour un véhicule automobile (5), comprenant au moins un levier de direction (3, 4) qui présente un axe longitudinal (A), et un module de base (2) sur lequel le levier de direction (3, 4) est disposé de façon mobile, et un dispositif de couplage par engrènement (14) qui présente un premier élément d'engrènement (15) qui est une roue dentée, et le premier élément d'engrènement (15) est monté en rotation autour d'un axe de rotation (B) et est disposé dans le module de base (2), et présente un deuxième élément d'engrènement (13) qui est relié au levier de direction (3, 4) et s'engrène avec le premier élément d'engrènement (15), dans lequel un mouvement du premier élément d'engrènement (15) peut être provoqué en fonction d'un mouvement du levier de direction (3, 4), et le mouvement du levier de direction (3, 4) peut être détecté en fonction de celui-ci, dans lequel le levier de direction (3, 4) présente une partie de couplage (9) qui est disposée dans le module de base (2),
dans lequel le deuxième élément d'engrènement (13) est réalisé comme une crémaillère en forme d'arc qui est disposée sur une paroi latérale (10, 11) de la partie de couplage (9) et est orientée en faisant saillie sous forme d'ailette à partir de la paroi latérale (10, 11) de sorte que le deuxième élément d'engrènement (13) est disposé sans chevauchement avec l'axe longitudinal (A) du levier de direction,
dans lequel le module de colonne de direction (1) présente une unité d'évaluation (21) qui est disposée dans le module de base (2) et qui permet de détecter magnétiquement un mouvement du premier élément d'engrènement (15) provoqué par le mouvement du levier de direction (3, 4),
dans lequel un élément magnétique (16) de l'unité d'évaluation (21) est solidaire du premier élément d'engrènement (15), et un élément de détection de champ magnétique (17) de l'unité d'évaluation (21) est disposé à l'extérieur du premier élément d'engrènement (15),
**caractérisé en ce que** le premier élément d'engrènement (15) est monté de manière axialement mobile en direction de l'axe de rotation (B), le module de colonne de direction (1) présentant un entraîneur (18) qui est couplé au levier de direction (3, 4), dans lequel, pour une deuxième direction d'actionnement du levier de direction (3, 4), le premier élément d'engrènement (15) peut être déplacé par l'entraîneur (18) dans la direction axiale, dans lequel l'unité d'évaluation (21) permet d'identifier cette deuxième direction d'actionnement en fonction de l'identification de ce mouvement de déplacement.

2. Module de colonne de direction (1) selon la revendication 1, **caractérisé en ce que** le deuxième élément d'engrènement (13) fait saillie en porte-à-faux à partir de la paroi latérale (10, 11).

3. Module de colonne de direction (1) selon la revendication 1, **caractérisé en ce que** les éléments d'engrènement (13, 15) sont couplés de telle sorte que pour une première direction d'actionnement du levier de direction (3, 4), le premier élément d'engrènement (15) tourne autour de l'axe de rotation (B), et l'unité d'évaluation (21) permet d'identifier cette première direction d'actionnement en fonction de l'identification de ce mouvement de rotation.

4. Module de colonne de direction (1) selon la revendication 1, **caractérisé en ce que** ledit un élément magnétique (16) et ledit un élément de détection de champ magnétique (17) permettent de détecter deux directions d'actionnement différentes du levier de direction (3, 4) .

5. Module de colonne de direction (1) selon la revendication 1, **caractérisé en ce que** l'unité d'évaluation (21) présente un premier élément de détection de champ magnétique (17) qui permet de détecter en relation fonctionnelle magnétique avec l'élément magnétique (16) une première direction d'actionnement du levier de direction (3, 4), et l'unité d'évaluation (21) présente un deuxième élément de détection de champ magnétique séparé qui permet de détecter en relation fonctionnelle magnétique avec l'élément magnétique (16) une deuxième direction d'actionnement du levier de direction (3, 4).

6. Module de colonne de direction (1) selon la revendication 1, **caractérisé en ce que** l'unité d'évaluation (21) présente un premier élément de détection de champ magnétique (17) qui permet de détecter en relation fonctionnelle magnétique avec l'élément magnétique (16) un premier levier de direction (3, 4), et l'unité d'évaluation (21) présente une unité de détection optique qui permet de détecter optiquement une deuxième direction d'actionnement du levier de direction (3, 4).

7. Module de colonne de direction (1) selon l'une quelconque des revendications 1 à 6, **caractérisé en ce qu'**un élément de détection de champ magnétique (17) est un capteur à effet Hall, en particulier un capteur à effet Hall bidimensionnel.

8. Module de colonne de direction (1) selon l'une quelconque des revendications précédentes, **caractérisé en ce que** le levier de direction (3, 4) est réalisé en plusieurs parties et présente une zone de poignée (8) reliée à la partie de couplage (9) et qui est disposée en faisant saillie hors du module de base (2) et peut être saisie pour actionner le levier de direction (3, 4) .

9. Véhicule automobile (5) comprenant un module de colonne de direction (1) selon l'une quelconque des revendications précédentes.
